# EUROPÄISCHE PATENTSCHRIFT

(11) **EP 4 028 178 B1**
(45) Veröffentlichungstag und Bekanntmachung des Hinweises auf die Patenterteilung: **05.11.2025**
(21) Anmeldenummer: 20792521.5
(22) Anmeldetag: 11.09.2020
(51) Int. Cl.: B06B 1/02, B06B 1/06, B23K 20/10, B23K 20/00, B23K 101/38, B23K 103/10, B23K 103/12

(54) **ULTRASCHALLWERKZEUG UND ULTRASCHALLVERBINDUNGSVORRICHTUNG HIERMIT**
ULTRASONIC TOOL AND ULTRASONIC CONNECTION DEVICE HEREIN
OUTIL À ULTRASONS ET DISPOSITIF DE LIAISON PAR ULTRASONS LE COMPRENANT

(30) Priorität: 11.09.2019 DE 102019124332; 11.09.2019 DE 102019124333; 11.09.2019 DE 102019124335; 11.09.2019 DE 102019124334
(43) Veröffentlichungstag der Anmeldung: 20.07.2022
(73) Patentinhaber: Hesse GmbH, 33104 Paderborn (DE)
(72) Erfinder: UNGER, Andreas, 33415 Verl (DE); BRÖKELMANN, Michael, 33129 Delbrück (DE); HUNSTIG, Matthias, 33104 Paderborn (DE); HESSE, Hans-Jürgen, 33106 Paderborn (DE)
(74) Vertreter: Wickord, Wiro
(86) Internationale Anmeldenummer: PCT/DE2020/100794
(87) Internationale Veröffentlichungsnummer: WO 2021/047738

(56) Entgegenhaltungen:
- EP-A2- 0 367 705
- EP-A2- 0 367 705
- JP-A- H05 259 220
- JP-A- H05 259 220
- US-A1- 2014 112 107
- US-A1- 2014 112 107
- US-A1- 2015 174 818
- US-A1- 2015 174 818

## Beschreibung

Die Erfindung betrifft ein Ultraschallwerkzeug nach dem Oberbegriff des Patentanspruchs 1 und eine Ultraschallverbindungsvorrichtung hiermit.

Ein gattungsgemäßes Ultraschallwerkzeug wird beispielsweise beim Ultraschallbonden beziehungsweise beim Ultraschallschweißen verwendet. Das Ultraschallwerkzeug wird über den Transducer, welcher insbesondere piezoelektrische Wandler als Schwingungserreger aufweist, zu Schwingungen, beispielsweise zu Torsionsschwingungen, Biegeschwingungen oder Längsschwingungen, angeregt. Die Schwingungserreger wiederum werden zur Anregung vom Ultraschallgenerator angesteuert.

Neben den klassischen Ultraschallwerkzeugen sind Ultraschallwerkzeuge für das laserunterstützte Ultraschallbonden beziehungsweise Ultraschallschweißen bekannt. Derartige Werkzeuge sind beispielsweise in der JP 5259220 A und der DE 10 2017 129 546 A1 beschrieben. Die Ultraschallwerkzeuge sehen eine in die Werkzeuglängsrichtung erstreckte Längsausnehmung vor, welche sich von der zweiten Stirnseite in Richtung der Verbindungskontaktfläche erstreckt beziehungsweise als Durchgangsausnehmung in dieser mündet. Der mittels des Lasergenerators bereitgestellte Laserstrahl wird in die Längsausnehmung des Ultraschallwerkzeugs eingekoppelt und gelangt durch die Längsausnehmung bis zu dem die Verbindungskontaktfläche aufweisenden Endbereich. Im Endbereich kann die Längsausnehmung eine Absorptionsbeschichtung aufweisen, die einer Reflexion des Laserstrahls in diesem Bereich entgegenwirkt und die Erwärmung des Ultraschallwerkzeugs im Endbereich begünstigt. Beispielsweise kann die Längsausnehmung als eine Durchgangsausnehmung ausgebildet sein, die in der Verbindungskontaktfläche mündet. Dort tritt der Laserstrahl aus dem Ultraschallwerkzeug aus und trifft auf das Verbindungsbauteil.

Ein Bondwerkzeug mit einer in eine Werkzeuglängsrichtung erstreckten innenliegenden Längsausnehmung offenbart auch die EP 0 367 705 A2. Die Längsausnehmung dient der Aufnahme eines Lichtwellenleiters, durch den hindurch ein Laserstrahl geführt wird und das Bondwerkzeug im Bereich einer Spitze von innen erwärmt.

Die US 2015/0174818 A1 beschreibt ein Verfahren zur Verstärkung beziehungsweise Auskleidung eines Gegenstands. Ein verflüssigtes Material wird hierbei in Poren oder Hohlräume des Gegenstands eingebracht.

Die US 2014/0112107 A1 beschreibt ein Verfahren und eine Vorrichtung zur Erzeugung von hochamplituden- und hochfrequentem fokussiertem Ultraschall mit lichtabsorbierenden Materialien.

Nachteilig bei den im Stand der Technik beschriebenen Lösungen ist, dass abhängig von den konstruktiven und räumlichen Gegebenheiten das Einkoppeln des Laserstrahls in die Längsausnehmung sowie ein Wechsel des Ultraschallwerkzeugs schwierig sein können. Darüber hinaus können beim Auftreffen des Laserstrahls auf das Verbindungsbauteil Dämpfe entstehen beziehungsweise Partikel sich lösen, so dass es zu Verunreinigungen am Verbindungsbauteil oder seiner Umgebung kommt.

Aufgabe der vorliegenden Erfindung ist es, ein verbessertes Ultraschallwerkzeug für das laserunterstützte Ultraschallbonden und/oder -schweißen sowie eine Ultraschallverbindungsvorrichtung hiermit anzugeben.

Zur Lösung der Aufgabe weist die Erfindung die Merkmale des Patentanspruchs 1 auf.

Der besondere Vorteil der Erfindung besteht darin, dass eine Eignung des Ultraschallwerkzeugs für das laserunterstützte Ultraschallbonden beziehungsweise das laserunterstützte Ultraschallschweißen verbessert wird. Die oberflächenstrukturierte Absorptionsfläche gewährleistet zum einen, dass ein auf sie gerichteter Laserstrahl im Wesentlichen absorbiert und ansonsten diffus reflektiert werden kann mit der Folge, dass eine gerichtete Reflexion vermieden und einer Beschädigung umliegender Komponenten der Ultraschallverbindungsanordnung wie beispielsweise der den Laserstrahl formenden und/oder führenden Optikkomponenten des Lasergenerators (Linsen, Lichtwellenleiter oder dergleichen), einer Beschädigung der mithin empfindlichen Verbindungsbauteile und einer Gefährdung von Personen vorgebeugt ist. Zum anderen verbessert die oberflächenstrukturierte Absorptionsfläche den Absorptionsgrad mit der Folge, dass ein hoher Prozentsatz der über den Laserstrahl zugeführten Energie das Ultraschallwerkzeug erwärmt und nur ein vergleichsweise geringer Prozentsatz reflektiert wird. Insbesondere kann die oberflächenstrukturierte Absorptionsfläche als eine Strahlenfalle für einen einfallenden Laserstrahl ausgebildet sein derart, dass der auf die Absorptionsfläche auftreffende Laserstrahl an der Absorptionsfläche mehrfach reflektiert und dabei stets anteilig absorbiert wird.

Darüber hinaus hat sich gezeigt, dass durch die Strukturierung die Oberfläche vergrößert wird. Dies führt dazu, dass die Strahlungsintensität beziehungsweise die Laser-Flächenleistungsdichte abnimmt. Es ist so einer Degradation beziehungsweise Zerstörung des Ultraschallwerkzeugs selbst, dem Ablösen von Partikeln und dem Entstehen von Dämpfen sowie schließlich einer Verunreinigung der Verbindungsstelle vorgebeugt. Zudem kann die Absorptionsfläche, da sie an der Werkzeugmantelfläche, das heißt außenseitig an dem Ultraschallwerkzeug gebildet ist, vergleichsweise kostengünstig und mit einer hohen Güte beziehungsweise Gleichmäßigkeit hergestellt werden.

Im Sinne der Erfindung ist der Endbereich des Ultraschallwerkzeugs zum einen durch die Verbindungskontaktfläche definiert. Zum anderen liegt die Absorptionsfläche wenigstens teilweise und bevorzugt vollständig in dem Endbereich und der Endbereich weist ausgehend von der Verbindungskontaktfläche eine maximale Erstreckung von 15 mm in die Werkzeuglängsrichtung auf, wobei der Endbereich maximal ein Drittel einer Länge des Ultraschallwerkzeugs abdeckt. Bei sehr kurzen Ultraschallwerkzeugen, die beispielsweise beim Ultraschall-Ballbonden eingesetzt werden, kann der Endbereich kürzer sein als 15 mm. Bei Ultraschallwerkzeugen mit einer Länge von mehr als 45 mm ist der Endbereichs kürzer als ein Drittel der Länge des Ultraschallwerkzeugs.

Nach der Erfindung ist ein Absorptionsgrad der Absorptionsfläche größer als ein Absorptionsgrad der Werkzeugmantelfläche außerhalb des Endbereichs oder als ein Absorptionsgrad einer zweiten Teilfläche der Werkzeugmantelfläche in dem Endbereich. Die erste Teilfläche und die zweite Teilfläche können aneinander angrenzen oder zueinander beabstandet sein, beispielsweise durch eine weitere Teilfläche. Vorteilhaft kann hierdurch das Absorptionsvermögen des Ultraschallwerkzeugs weiter verbessert und eine Erwärmung des Ultraschallwerkzeugs bevorzugt benachbart zu der Verbindungskontaktfläche begünstigt werden.

Nach einer Weiterbildung der Erfindung ist die Absorptionsfläche regelmäßig strukturiert. Durch die regelmäßige Strukturierung ist das Absorptionsvermögen über die Absorptionsfläche im Wesentlichen konstant. Temperaturspitzen werden so vermieden und einer unzulässig hohen lokalen Erwärmung vorgebeugt. Darüber hinaus lässt sich das Ultraschallwerkzeug einfach fertigen und eine Streuung zwischen den Ultraschallwerkzeugen ist gering.

Nach einer Weiterbildung der Erfindung verjüngt sich das Ultraschallwerkzeug in dem Endbereich. Beispielsweise verjüngt sich das Ultraschallwerkzeug keilförmig. Ein senkrecht zu der Werkzeuglängsrichtung bestimmter Querschnitt verringert sich dabei jedenfalls abschnittsweise. Bevorzugt reduzieren sich zudem die Außenabmessungen des Ultraschallwerkzeugs in Richtung der Verbindungskontaktfläche kontinuierlich.

Nach einer Weiterbildung der Erfindung ist die Oberflächenstruktur der Absorptionsfläche als eine Mikrostruktur ausgebildet ist. Insbesondere ist eine senkrecht zu der Werkzeugmantelfläche bestimmte Tiefe der Mikrostrukturen größer als 1 µm. Die Tiefe der Mikrostrukturen liegt dann ungefähr in der gleichen Größenordnung wie die Wellenlänge des Laserstrahls. Bevorzugt ist die Tiefe der Mikrostrukturen größer als 10 µm. Eine maximale Tiefe der Mikrostrukturen beträgt 350 µm. Größere Tiefen beziehungsweise Abmessungen werden im Kontext der Erfindung nicht mehr als Mikrostrukturen aufgefasst.

Beispielsweise können die Mikrostrukturen regelmäßig ausgebildet sein und eine insbesondere wiederkehrend beziehungsweise periodisch geformte Oberfläche aufweisen. Beispielsweise können die Mikrostrukturen unregelmäßig gebildet sein.

Beispielsweise kann eine Rauigkeit der die Absorptionsfläche bildenden, mikrostrukturierten ersten Teilfläche größer sein als eine Rauigkeit der zweiten Teilfläche der Werkzeugmantelfläche. Im Sinne der Erfindung charakterisiert die Rauigkeit eine Unebenheit einer Oberflächenhöhe der ersten Teilfläche und der zweiten Teilfläche der Werkzeugmantelfläche. Vorliegend wird dabei auf die in der Praxis weit verbreiteten Mittenrauwert Rₐ der Teilflächen abgestellt. Der Mittenrauwert gibt allgemein den mittleren Abstand eines Messpunktes - auf der Oberfläche - zur Mittellinie an. Die Mittellinie schneidet innerhalb der Bezugsstrecke das wirkliche Profil so, dass die Summe der Profilabweichungen in einer parallelen Ebene zur Mittellinie auf die Länge der Messstrecke verteilt wird. Der Mittenrauwert entspricht also dem arithmetischen Mittel der betragsmäßigen Abweichung von der Mittellinie.

Beispielsweise können an der Absorptionsfläche makroskopische Oberflächenstrukturen vorgesehen sein mit einer Tiefe von mehr als 350 µm. Die Makrostrukturen sind bevorzugt regelmäßig ausgebildet. Konturstrukturen, insbesondere Körperkanten des Ultraschallwerkzeugs, gelten nicht als Oberflächenstrukturen im Sinne der Erfindung.

Nach einer Weiterbildung der Erfindung sieht die oberflächenstrukturierte Absorptionsfläche eine Beschichtung vor. Insbesondere kann eine das Absorptionsvermögen verbessernde Absorptionsbeschichtung vorgesehen sein. Vorteilhaft kann hierdurch die Geschwindigkeit bei der Erwärmung des Ultraschallwerkzeugs weiter erhöht und der Anteil der reflektierenden Laserstrahlung reduziert werden.

Nach einer Weiterbildung der Erfindung ist die Absorptionsfläche makroskopisch eben, das heißt nicht gewölbt ausgebildet. Vorteilhaft kann eine ebene Absorptionsfläche einfach und demzufolge kostengünstig hergestellt und vergleichsweise genau, das heißt den Vorgabewerten entsprechend, ausgebildet werden.

Nach einer Weiterbildung der Erfindung ist die Absorptionsfläche geneigt zu der Werkzeuglängsrichtung beziehungsweise der Werkzeuglängsmittelachse orientiert. Vorteilhaft erlaubt es die geneigte Anordnung der Absorptionsfläche, diese in dem sich verjüngenden Endbereich des Ultraschallwerkzeugs in unmittelbarer Nähe zu der stirnseitigen Verbindungskontaktfläche vorzusehen. Die räumliche Nähe der Verbindungskontaktfläche und der Absorptionsfläche begünstigen dabei eine schnelle Erwärmung des Endbereichs des Ultraschallwerkzeugs.

Nach einer Weiterbildung der Erfindung sieht die Absorptionsfläche rillenförmige Oberflächenstrukturen beziehungsweise punktförmige Oberflächenstrukturen vor. Die rillen- beziehungsweise punktförmigen Oberflächenstrukturen sind vergleichsweise einfach und demzufolge kostengünstig zu fertigen. Die rillenförmigen Oberflächenstrukturen können insbesondere parallel strukturiert und/oder kreuzstrukturiert angeordnet sein. Insbesondere können sich die rillenförmigen Oberflächenstrukturen quer zu der Werkzeuglängsrichtung erstrecken.

Nach einer Weiterbildung der Erfindung ist die Absorptionsfläche symmetrisch zu einer die Werkzeuglängsrichtung aufnehmenden Werkzeuglängsmittelebene orientiert. Besonders vorteilhaft ist die Werkzeuglängsmittelebene als eine Symmetrieebene des Ultraschallwerkzeugs ausgebildet. Vorteilhaft vereinfacht sich durch die Symmetrie die Herstellung des Ultraschallwerkzeugs sowie der Einbau desselben in die Ultraschallverbindungsvorrichtung. Darüber hinaus begünstigt die Symmetrie das Schwingungsverhalten des Ultraschallwerkzeugs.

Nach einer Weiterbildung der Erfindung ist an der wenigstens einen Verbindungskontaktfläche eine Profilierung vorgesehen, mit der das Ultraschallwerkzeug gegen das Verbindungsbauteil angedrückt wird. Insbesondere kann an der Verbindungskontaktfläche des Ultraschallwerkzeugs eine Anlagekontur für das Verbindungsbauteil vorgesehen sein. Beispielsweise kann als Anlagekontur eine V-förmige Querausnehmung für einen Bonddraht aus Aluminium oder Kupfer oder eine Kissen- und/oder Wabenstruktur zum Ultraschallbonden beziehungsweise Ultraschallschweißen von flachen Teilen wie Aluminiumbandmaterial oder Leadframes aus Kupferblech vorgesehen sein. Durch das Vorsehen der Profilierung beziehungsweise Anlagekontur ist die Ebenheit der Verbindungskontaktfläche wenigsten lokal unterbrochen und es kann eine kraft- beziehungsweise formschlüssige Festlegung des Verbindungsbauteils am Ultraschallwerkzeug bewirkt werden.

Nach einer Weiterbildung der Erfindung ist die oberflächenstrukturierte Absorptionsfläche durch Drahterodieren, Senkerodieren, elektrochemisches Abtragen, Gravieren, Laserstrukturieren beziehungsweise Laserablation und/oder urformend beziehungsweise durch spanende Bearbeitung und insbesondere kostengünstig durch Schleifen hergestellt.

Nach einer Weiterbildung der Erfindung besteht das Ultraschallwerkzeug mindestens in dem Endbereich aus einem Hartmetall, aus Stahl oder aus einer Keramik, bevorzugt aus einem Wolframcarbid-basierten Hartmetall oder Bornitrid. Besonders bevorzugt weist es Wolframcarbid in einer Kolbatmatrix auf.

Zur Lösung der Aufgabe weist die Erfindung die Merkmale des Patentanspruchs 10 auf. Demzufolge umfasst eine Ultraschallverbindungsvorrichtung zum Ultraschallschweißen und/oder Ultraschallbonden:
- ein erfindungsgemäßes Ultraschallwerkzeug mit wenigstens einer an der Werkzeugmantelfläche gebildeten oberflächenstrukturierten Absorptionsfläche,
- einen Ultraschallgenerator und einen Transducer, wobei der Ultraschallgenerator den Transducer derart zu Schwingungen anregt und der Transducer mit dem Ultraschallwerkzeug derart zusammenwirkt, dass das Ultraschallwerkzeug zu Ultraschallschwingungen und bevorzugt zu Ultraschallbiegeschwingungen angeregt ist,
- einen Lasergenerator zum Bereitstellen eines Laserstrahls,
wobei der Laserstrahl so auf den Endbereich des Ultraschallwerkzeugs ausgerichtet ist, dass er bevorzugt vollständig und wenigstens teilweise auf die dort gebildete Absorptionsfläche trifft zur Erwärmung derselben.

Nach der Erfindung ist die Oberflächenstruktur der Absorptionsfläche als eine Mikrostruktur ausgebildet. Eine Tiefe der Mikrostruktur ist dabei bevorzugt größer als eine Wellenlänge des Laserstrahls und höchst bevorzugt um einen Faktor 10 oder mehr größer als die Wellenlänge des Laserstrahls. Vorteilhaft haben Untersuchungen gezeigt, dass eine derartige Anpassung der mikrostrukturierten Absorptionsfläche an die Wellenlänge des Laserstrahls das Absorptionsvermögen insgesamt begünstigt und so zu einer schnellen Erwärmung des Ultraschallwerkzeugs und einer Reduzierung der ungewünschten Reflexion des Laserstrahls führt.

Nach einer Weiterbildung der Erfindung ist die Wellenlänge des Laserstrahls so auf das Material des Ultraschallwerkzeugs, die Beschaffenheit der Oberflächenstruktur und/oder die Beschichtung abgestimmt, dass ein Absorptionsgrad der Absorptionsfläche von mindestens 0,81 und bevorzugt von mindestens 0,86 und besonders bevorzugt von mindestens 0,9 bereitgestellt ist. Beispielsweise kann dieser Absorptionsgrad erreicht werden, wenn an einem Ultraschallwerkzeug aus einem Wolframcarbid-basierten Hartmetall (Wolframcarbid in Kobaltmatrix) durch Laserablation eine Mikrostruktur mit einer Tiefe von wenigstens 10 µm als Absorptionsfläche bereitgestellt und ein Laserstrahl mit einer Wellenlänge von etwa 1000 nm verwendet wird.

Nach einer Weiterbildung der Erfindung ist der Laserstrahl so ausgerichtet, dass er schräg, das heißt nicht senkrecht, zur Werkzeugmantelfläche auf die Absorptionsfläche trifft. Bevorzugt ist zwischen der Werkzeuglängsrichtung und einer Einfallrichtung des Laserstrahls ein spitzer Winkel gebildet. Besonders bevorzugt bestrahlt der Laserstrahl die Absorptionsfläche schräg von oben. Vorteilhaft vereinfacht sich durch die schräge Ausrichtung die Anordnung des Lasergenerators beziehungsweise die Integration einzelner Teile des Lasergenerators in einem verfahrbaren Positionierkopf der Ultraschallverbindungsvorrichtung. Insbesondere können Linsen beziehungsweise Lichtwellenleiter zum Formen und Führen des Laserstrahls an dem Positionierkopf vorgesehen und mitbewegt werden, während andere Komponenten des Lasergenerators (zum Beispiel eine Laserquelle) ortsfest installiert sind. Zudem wird durch die schräge Bestrahlung der Absorptionsfläche an der Werkzeugspitze ein großer Freiraum gebildet, so dass einer Kollision mit Komponenten des Verbindungsbauteils entgegengewirkt beziehungsweise eine Flexibilität beim Verfahren des Positionierkopfs verbessert ist.

Nach einer Weiterbildung der Erfindung kann die Ultraschallverbindungsvorrichtung eine zur berührungslosen Temperaturmessung eingerichtete Messeinrichtung aufweisen, wobei die Messeinrichtung dem Ultraschallwerkzeug so zugeordnet ist, dass die Temperaturmessung im Endbereich des Ultraschallwerkzeugs und bevorzugt in der Absorptionsfläche erfolgt.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Bondanordnung gelten selbstverständlich auch im Zusammenhang mit dem erfindungsgemäßen Bondwerkzeug und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Es zeigen:
- Fig. 1: eine perspektivische Wiedergabe einer ersten Ausführungsform eines in eine Werkzeuglängsrichtung langerstreckten Ultraschallwerkzeugs mit einem Endbereich, an dem eine oberflächenstrukturierte Absorptionsfläche ausgebildet ist,
- Fig. 2: eine vergrößerte Darstellung des Endbereichs des Ultraschallwerkzeugs nach Fig. 1 mit der Absorptionsfläche,
- Fig. 3: den Endbereich des Ultraschallwerkzeugs nach den Fig. 1 und 2, wobei ein Laserstrahl divergent auf die Absorptionsfläche trifft,
- Fig. 4: eine Gegenüberstellung von Erwärmungskurven für das Ultraschallwerkzeug nach den Fig. 1 bis 3 und eines konventionellen Ultraschallwerkzeugs ohne Absorptionsfläche,
- Fig. 5: den Endbereich des Ultraschallwerkzeugs nach den Fig. 1 bis 3 mit einem kollimierten Laserstrahl,
- Fig. 6: den Endbereich des Ultraschallwerkzeugs nach Fig. 2, wobei ein Laserstrahl konvergent auf die Absorptionsfläche trifft,
- Fig. 7: eine perspektivische Darstellung einer zweiten Ausführungsform des Ultraschallwerkzeugs, welches in einer in dem Endbereich vorgesehen Verbindungskontaktfläche eine Anlagekontur für ein Verbindungsbauteil vorsieht,
- Fig. 8: eine vergrößerte Darstellung des Endbereichs des Ultraschallwerkzeugs nach Fig. 7,
- Fig. 9a bis d: eine exemplarische Zusammenstellung verschiedener Oberflächenstrukturierungen der Absorptionsfläche,
- Fig. 10: eine Prinzipdarstellung einer Geometrie der Oberflächenstruktur,
- Fig. 11: verschiedene exemplarische Strahlengänge für den auf die Oberflächenstruktur treffenden Laserstrahl,
- Fig. 12a bis e: verschiedenartige exemplarische Oberflächenstrukturformen der Absorptionsfläche im Querschnitt,
- Fig. 13: eine perspektivische Darstellung einer dritten Ausführungsform eines Ultraschallwerkzeugs, welches bezogen auf eine senkrecht zu der Werkzeuglängsrichtung orientierte Quermittelebene symmetrisch ausgebildet ist,
- Fig. 14: eine Seitenansicht des Ultraschallwerkzeugs nach Fig. 13,
- Fig. 15: eine Frontansicht des Ultraschallwerkzeugs nach Fig. 13 und
- Fig. 16: das Ultraschallwerkzeug nach Fig. 13 mit einem divergent auf den Absorptionsbereich treffenden Laserstrahl.

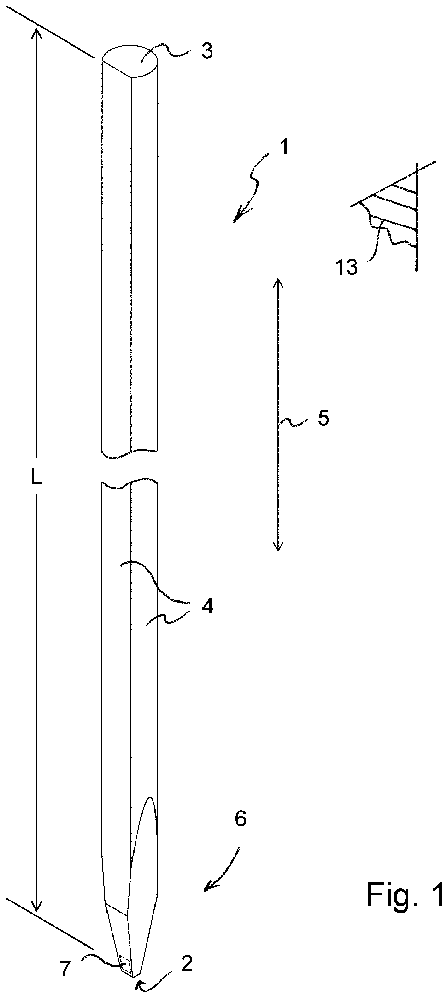

Das Ultraschallwerkzeug 1 nach Fig. 1 sieht eine als eine Verbindungskontaktfläche ausgebildete erste Stirnseite 2, eine der ersten Stirnseite 2 gegenüberliegende zweite Stirnseite 3 sowie eine die Stirnseiten 2, 3 verbindende Werkzeugmantelfläche 4 vor. Das Ultraschallwerkzeug 1 ist in eine Werkzeuglängsrichtung 5 langgestreckt ausgebildet. Es weist von der ersten Stirnseite 2 bis zu der zweiten Stirnseite 3 eine Länge L auf, die größer ist als 50 mm. Bezogen auf die Werkzeuglängsrichtung 5 bilden die unteren 15 mm des Ultraschallwerkzeugs 1 mit der Verbindungskontaktfläche 2 einen Endbereich 6 des Ultraschallwerkzeugs 1. In dem Endbereich 6 verjüngt sich das Ultraschallwerkzeug 1 bezogen auf einen senkrecht zu der Werkzeuglängsrichtung 5 orientierten Querschnitt in Richtung der Verbindungskontaktfläche 2 keilförmig. Das Ultraschallwerkzeug 1 ist bezüglich einer die Werkzeuglängsrichtung 5 aufnehmenden Werkzeuglängsmittelebene 13 symmetrisch ausgebildet.

Die Verbindungskontaktfläche 2 ist im Wesentlichen senkrecht zu der Werkzeuglängsrichtung 5 erstreckt. Die Verbindungskontaktfläche 2 dient dazu, ein nicht dargestelltes Verbindungsbauteil gegen das Ultraschallwerkzeug 1 abzustützen beziehungsweise anzudrücken.

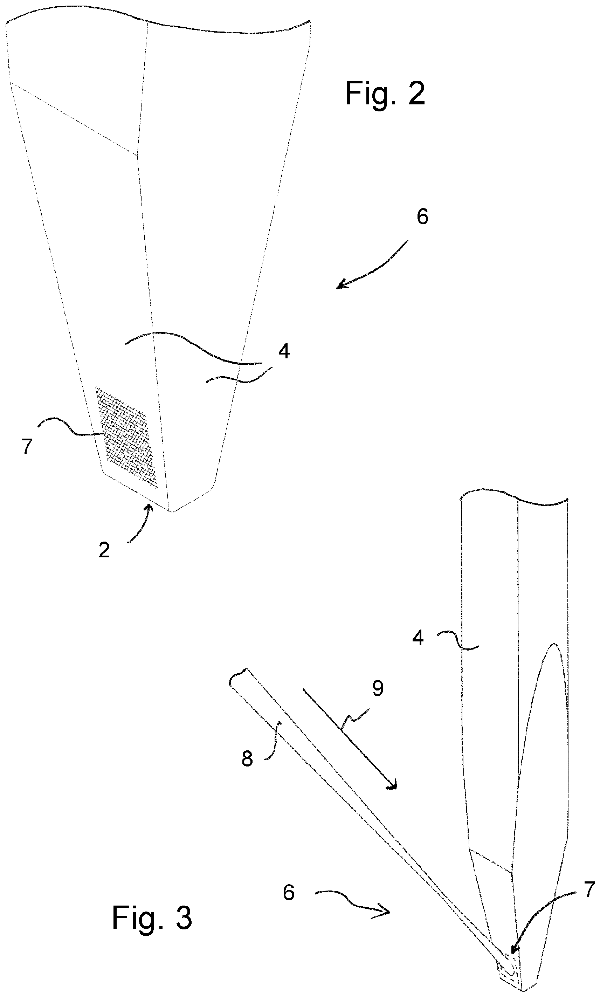

In dem Endbereich 6 ist an der Werkzeugmantelfläche 4 beabstandet zu der Verbindungskontaktfläche 2 eine mikrostrukturierte Absorptionsfläche 7 vorgesehen. Die Absorptionsfläche 7, welche vergrößert in Fig. 2 wiedergegeben ist, wird durch rillenförmige Mikrostrukturen gebildet, die im vorliegenden Fall regelmäßig strukturiert, in zwei Gruppen zueinander parallel und sich unter einem Winkel von 45° kreuzend angeordnet sind. Die Mikrostrukturen weisen eine Tiefe T von etwa 10 µm sowie eine Breite B beziehungsweise einen Abstand auf, welcher etwa halb so groß ist wie die Tiefe T.

Durch die Mikrostrukturierung der Werkzeugmantelfläche 4 ist ein Absorptionsgrad der Absorptionsfläche 7 größer als ein Absorptionsgrad der Werkzeugmantelfläche 4 außerhalb der Absorptionsfläche 7. Typischerweise liegt der Absorptionsgrad der Absorptionsfläche 7 im Bereich von 0,9 oder mehr.

Fig. 3 zeigt einen divergenten Laserstrahl 8, welcher schräg von oben unter einem spitzen Winkel zu der Werkzeuglängsrichtung 5 auf die in dem Endbereich 6 gebildete Absorptionsfläche 7 des Ultraschallwerkzeugs 1 gerichtet ist und das Ultraschallwerkzeug 1 im Bereich der Verbindungskontaktfläche 2 erwärmt. Eine Einfallrichtung 9 des Laserstrahls 8 ist geneigt zur Werkzeugmantelfläche 4, das heißt der Laserstrahl trifft nicht senkrecht auf die Absorptionsfläche 7.

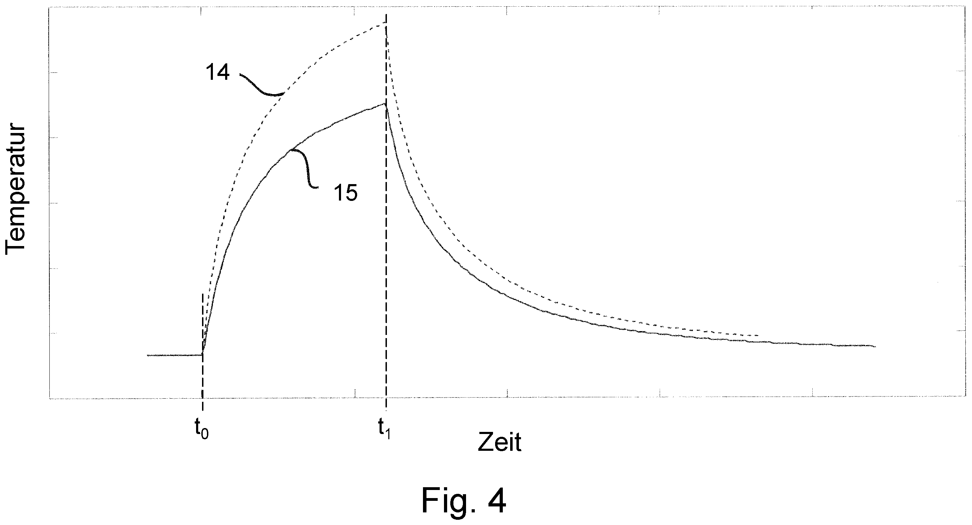

Fig. 4 zeigt zwei Temperaturverläufe über der Zeit. Der durch eine gestrichelte Linie dargestellte Graph 14 zeigt den Temperaturverlauf für das Ultraschallwerkzeug 1 nach Fig. 1. Demgegenüber zeigt der durch die durchgezogene Linie dargestellte Graph 15 den Temperaturverlauf für ein in Bezug auf die makroskopische Geometrie sowie den Werkstoff identisches Ultraschallwerkzeug ohne Absorptionsfläche.

Beide Ultraschallwerkzeuge 1 werden mit einem Laserstrahl 8 gleicher Wellenlänge, gleicher Fokussierung und Positionierung mit einer gleichen, konstanten Leistung bestrahlt. Zum Zeitpunkt t₀ wird der Laserstrahl 8 eingeschaltet und zum Zeitpunkt t₁ ausgeschaltet. Ausgehend von einer Umgebungstemperatur erwärmen sich die beiden Ultraschallwerkzeuge durch den Laserstrahl 8.

Die gegenübergestellten Temperaturverläufe zeigen deutlich, dass die Erwärmung des erfindungsgemäßen Ultraschallwerkzeugs 1 mit der Absorptionsfläche 7 schneller erfolgt und das erfindungsgemäße Ultraschallwerkzeug 1 auf eine höhere Temperatur erwärmt wird als das konventionelle Ultraschallwerkzeug.

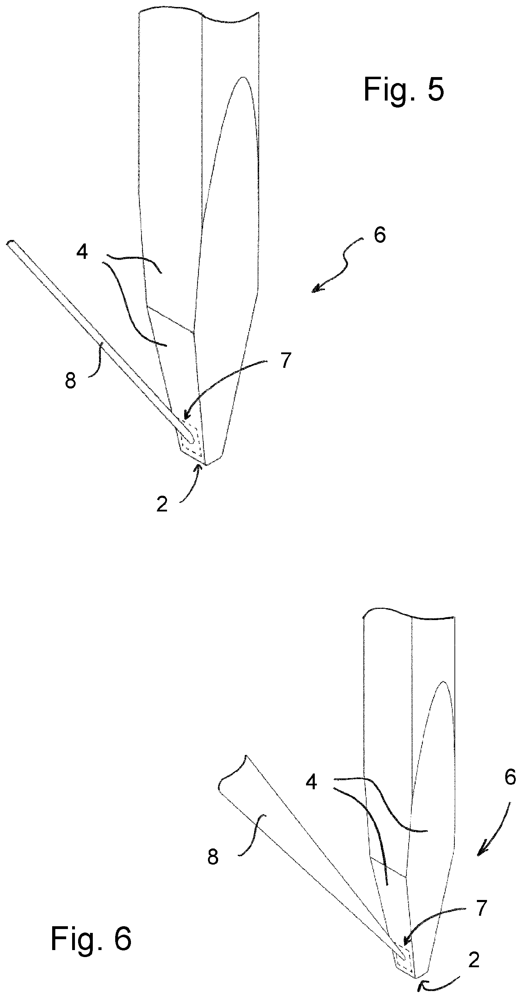

Das Ultraschallwerkzeug 1 kann wie dargestellt mittels eines divergent auf die Absorptionsfläche 7 treffenden Laserstrahls 8 erwärmt werden. Alternativ kann das Ultraschallwerkzeug 1 - wie in Fig. 5 gezeigt - mit einem kollimierten Laserstrahl 8 oder - wie in Fig. 6 dargestellt - mit einem konvergenten Laserstrahl 8 bestrahlt werden.

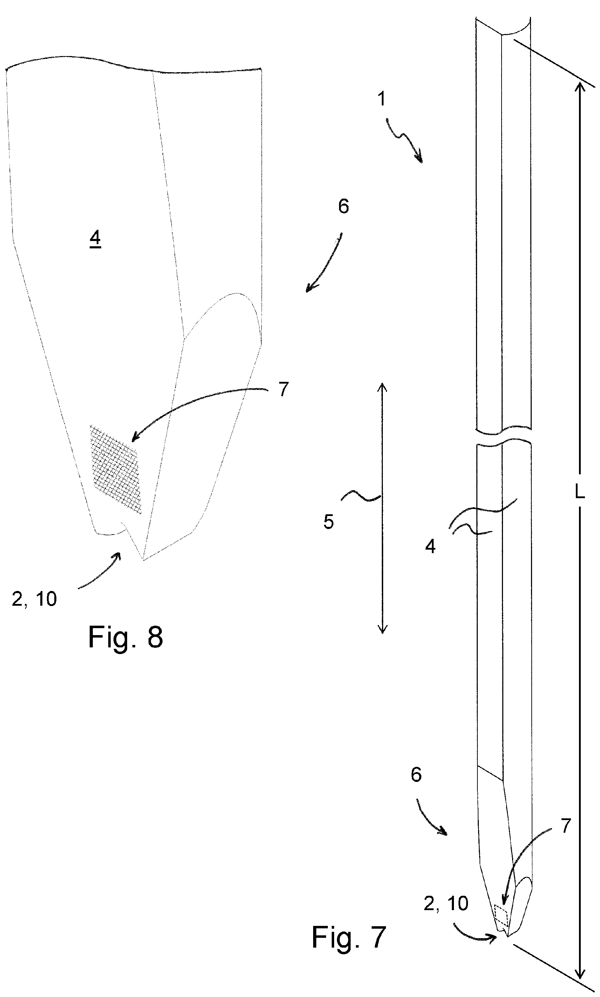

Die Fig. 7 und 8 zeigen eine zweite Ausführungsform des Ultraschallwerkzeugs 1. Das Ultraschallwerkzeug 1 nach Fig. 7 entspricht in weiten Teilen dem Ultraschallwerkzeug 1 nach dem ersten Ausführungsbeispiel. Es ist jedoch im Bereich der Verbindungskontaktfläche 2 eine V-förmige, quer zur der Werkzeuglängsrichtung 5 erstreckte Aufnahmekontur für einen nicht dargestellten Bonddraht als Verbindungsbauteil vorgesehen. Während der Herstellung einer Bondverbindung wird der Bonddraht in der V-förmigen Anlagekontur 10 vorgesehen und gegen ein Substrat angedrückt.

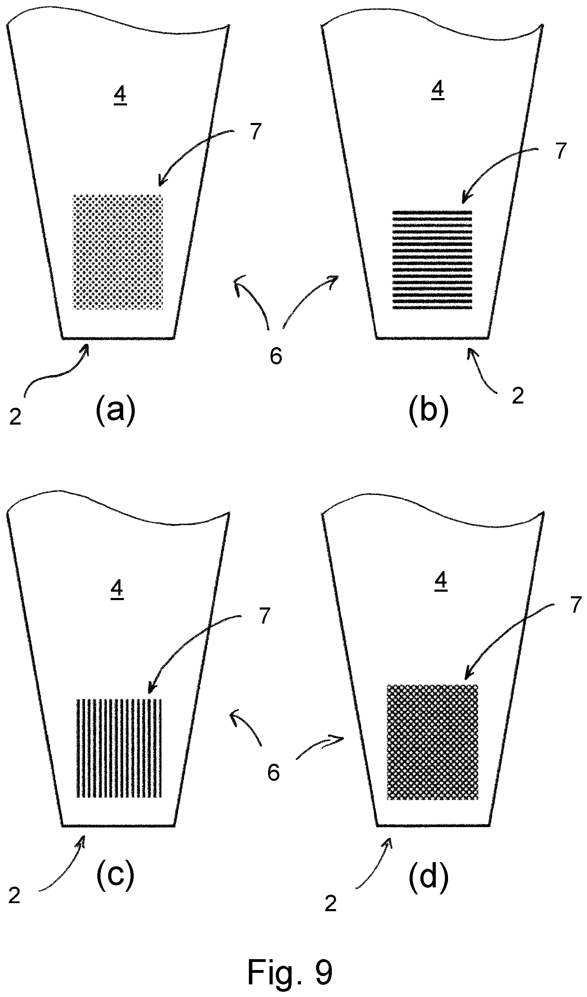

Fig. 9 zeigt unterschiedliche Mikrostrukturierungen der Absorptionsfläche 7. In Fig. 9a ist die mikrostrukturierte Absorptionsfläche 7 durch einzelne punktförmige Vertiefungen beziehungsweise Mulden gebildet. Demgegenüber ist die Mikrostruktur in Fig. 9b durch quer zu der Werkzeuglängsrichtung 5 orientierte, das heißt bei der bestimmungsgemäßen Verwendung des Ultraschallwerkzeugs 1 üblicherweise horizontal erstreckte Rillen, gebildet. Fig. 9c zeigt ebenfalls rillenförmige Mikrostrukturen der Absorptionsfläche 7, welche gegenüber der horizontalen Anordnung nach Fig. 9b um 90° gedreht angeordnet sind. Fig. 9d zeigt schließlich rillenförmige Mikrostrukturen, bei denen die Rillen unter 45° und zueinander gekreuzt angeordnet sind.

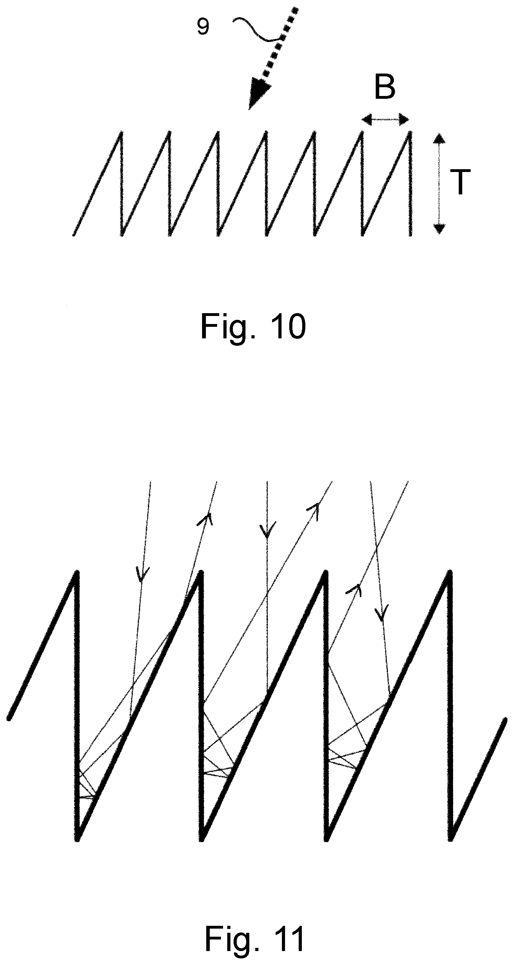

Exemplarisch zeigt Fig. 10 eine durch eine Mehrzahl im Querschnitt gleicher rechtschenkeliger Dreiecke gebildete rillenförmige Oberflächenstrukturierung. Dabei ist die senkrecht zu der Werkzeugmantelfläche bestimmte Tiefe T der Oberflächenstrukturen größer als 1 µm. Bevorzugt ist die Tiefe T der Oberflächenstrukturen größer als 10 µm. Eine maximale Tiefe T der Oberflächenstrukturen beträgt 350 µm. Es handelt sich demzufolge im vorliegenden Beispiel um Mikrostrukturen. Die Breite B der Mikrostrukturen ist bevorzugt höchstens halb so groß ist wie die Tiefe T.

Fig. 11 zeigt eine vergrößerte Ausschnittsdarstellung der Mikrostruktur nach Fig. 10 mit drei divergent auf die Mikrostruktur auftreffenden Laserstrahlen. Die eintreffenden Laserstrahlen werden wiederholt und im vorliegenden Beispiel sechs bis sieben Mal beim Auftreffen auf die Absorptionsfläche 7 teilreflektiert. Nach der mehrmaligen Reflexion verlassen die Laserstrahlen mit einer aufgrund der wiederholten Absorption um Größenordnungen geringeren Leistung diffus reflektiert die Absorptionsfläche 7.

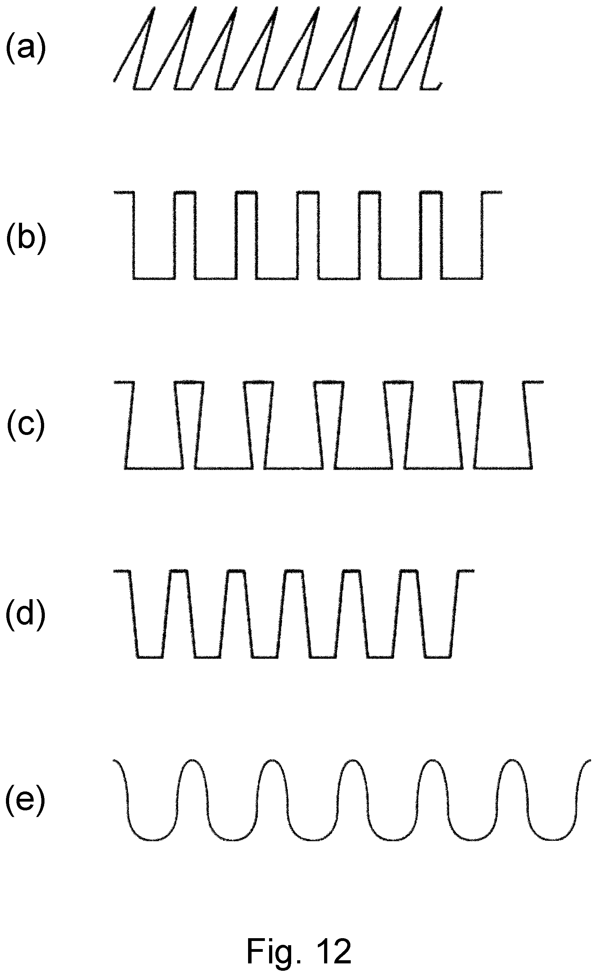

Fig. 12 zeigt eine Auswahl verschiedener regelmäßig gebildeter Mikrostrukturen im Querschnitt. Während die Fig. 12a, 12b, 12c und 12d idealisierte Geometrien zeigen, ist in Fig. 12e ein Beispiel einer realen, durch Laserablation hergestellten mikrostrukturierten Absorptionsfläche 7 mit minder scharfen, abgerundeten Konturübergängen gezeigt.

Die in der Fig. 9 bis 12 dargestellten Mikrostrukturen verstehen sich nur als Beispiele. Grundsätzlich ist man bei der Gestaltung der Mikrostrukturen frei. Die Mikrostrukturen können beispielsweise regelmäßig oder unregelmäßig beziehungsweise unbestimmt geformt sein und/oder eine sich örtlich ändernde Strukturierung aufweisen. Applikationsspezifisch, materialabhängig und abhängig von den Betriebsparametern des Laserstrahls kann die Mikrostruktur der Absorptionsfläche insbesondere so gestaltet werden, dass sich eine hohe und bevorzugt gleichmäßige Absorption über die Fläche ergibt und unzulässige lokale Temperaturspitzen vermieden werden.

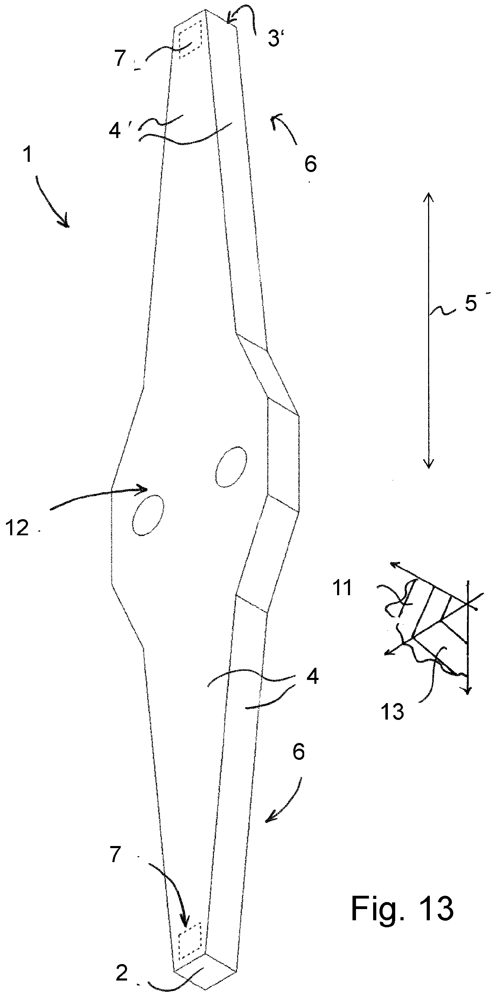

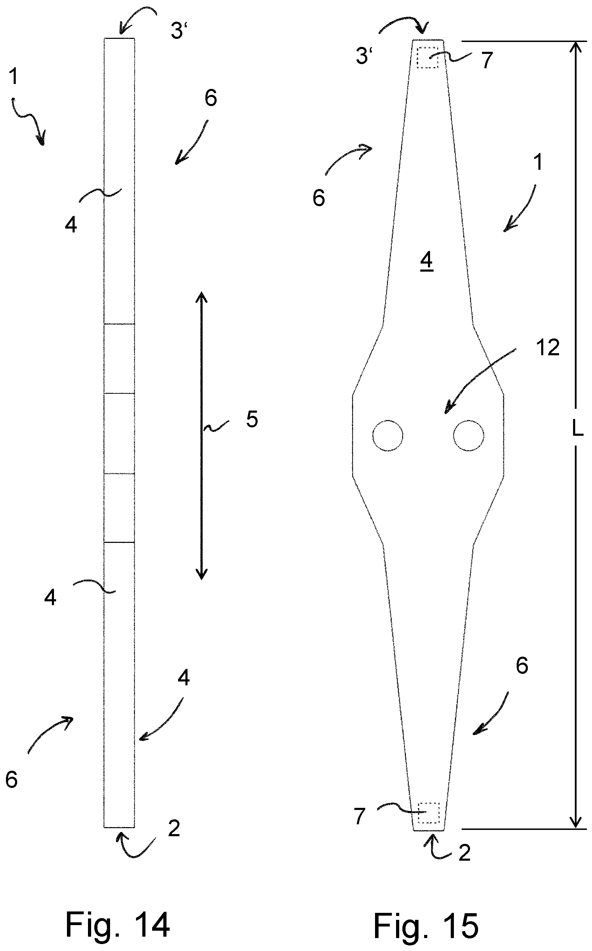

Die Fig. 13 bis 15 zeigen eine dritte Ausführungsform des erfindungsgemäßen Ultraschallwerkzeugs 1. Das Ultraschallwerkzeug 1 ist als Ultraschallschweißwerkzeug symmetrisch bezüglich einer senkrecht zu der Werkzeuglängsrichtung 5 orientierten Quermittelebene 11 gebildet. Zusätzlich ist es wie gehabt symmetrisch bezüglich der die Werkzeuglängsrichtung 5 aufnehmenden Werkzeuglängsmittelebene 13 ausgebildet. Das Ultraschallwerkzeug 1 sieht eine Aufnahme 12 vor, welche so gestaltet ist, dass das Ultraschallwerkzeug 1 in zwei um 180° gedrehten Orientierungen verwendet werden kann. Es handelt sich insofern um ein Ultraschallwendewerkzeug 1.

Es ist bei dem vorliegenden Ultraschallwerkzeug 1 so, dass wie gehabt die erste Stirnseite 2 und zusätzlich auch die zweite Stirnseite 3' des Ultraschallwerkzeugs 1 als Verbindungskontaktfläche ausgebildet sind. Jeweils verjüngt sich das Ultraschallwerkzeug 1 in Richtung der Verbindungskontaktfläche 2, 3'. Jede Verbindungskontaktfläche 2, 3' ist Teil eines Endbereichs 6. Die beiden einander gegenüberliegenden Endbereiche 6 erstrecken sich ausgehend von den Verbindungskontaktflächen 2, 3' 15 mm in die Werkzeuglängsrichtung 5. Sie sehen jeweils eine Absorptionsfläche 7 vor, welche benachbart zu der ersten Stirnseite 2 beziehungsweise benachbart zu der zweiten Stirnseite 3' positioniert ist.

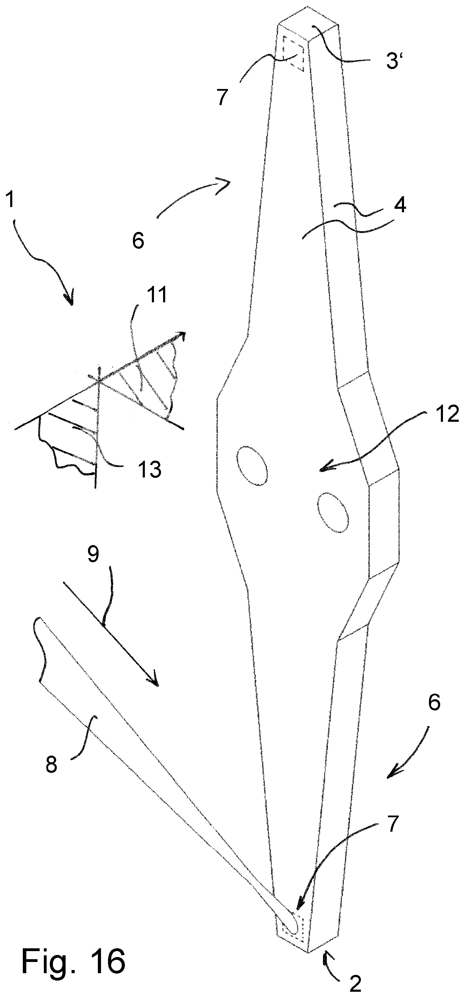

Fig. 16 zeigt, wie der Laserstrahl 8 auf die der ersten Stirnseite 2 zugeordnete Absorptionsfläche 7 trifft. Durch den Laserstrahl 8 wird der Endbereich 6 mit der Verbindungskontaktfläche 2 erwärmt. Dabei ist der Laserstrahl 8 so orientiert, dass die Einfallrichtung 9 des Laserstrahls 8 mit der Werkzeuglängsrichtung 5 einen spitzen Winkel einschließt.

Grundsätzlich ist die Darstellung der Geometrie vorliegend lediglich beispielhaft. Auch wenn die Oberflächenstrukturen in den diskutierten Ausführungsbeispielen als Mikrostrukturen realisiert sind, können ebenso Makrostrukturen mit einer Tiefe von mehr als 350 µm die Absorptionsfläche definieren, die dann allerdings nicht unter die beanspruchte Erfindung fallen.

Gleiche Bauteile und Bauteilfunktionen sind mit den gleichen Bezugszeichen gekennzeichnet.

## Patentansprüche

1. Ultraschallwerkzeug (1) umfassend eine erste Stirnseite (2) und eine der ersten Stirnseite (2) gegenüberliegende zweite Stirnseite (3, 3') sowie eine die erste Stirnseite (2) und die zweite Stirnseite (3, 3') verbindende Werkzeugmantelfläche (4), wobei das Ultraschallwerkzeug (1) über einen Transducer, welcher insbesondere piezoelektrische Wandler als Schwingungserreger aufweist, zu Schwingungen anregbar ist, wobei das Ultraschallwerkzeug (1) in eine Werkzeuglängsrichtung (5) langgestreckt ausgebildet ist, wobei wenigstens die erste Stirnseite (2) als eine Verbindungskontaktfläche (2, 3') ausgebildet ist, welche eingerichtet ist zum Andrücken des Ultraschallwerkzeugs (1) an ein Verbindungsbauteil, und wobei das Ultraschallwerkzeug (1) einen die Verbindungskontaktfläche (2, 3') aufweisenden Endbereich (6) aufweist, der sich von der Verbindungskontaktfläche (2, 3') in die Werkzeuglängsrichtung (5) über 15 mm, maximal jedoch ein Drittel einer Länge (L) des Ultraschallwerkzeugs (1) in Richtung der gegenüberliegenden Stirnseite (2, 3, 3') erstreckt, **dadurch gekennzeichnet, dass** in dem Endbereich (6) eine erste Teilfläche der Werkzeugmantelfläche (4) als eine oberflächenstrukturierte Absorptionsfläche (7) ausgebildet ist, wobei die oberflächenstrukturierte Absorptionsfläche (7) ausgebildet ist, einen auf sie gerichteten Laserstrahl im Wesentlichen zu absorbieren und ansonsten diffus zu reflektieren, dass ein Absorptionsgrad der Absorptionsfläche (7) größer ist als ein Absorptionsgrad einer an die Absorptionsfläche (7) angrenzenden zweiten Teilfläche der Werkzeugmantelfläche (4) und/oder als ein Absorptionsgrad der Werkzeugmantelfläche (4) außerhalb des Endbereichs (6) und dass die Oberflächenstruktur der Absorptionsfläche (7) als eine Mikrostruktur ausgebildet ist, wobei eine Rauigkeit der die Absorptionsfläche (7) bildenden ersten Teilfläche größer ist als eine Rauigkeit der zweiten Teilfläche der Werkzeugmantelfläche (4).

2. Ultraschallwerkzeug nach Anspruch 1, **dadurch gekennzeichnet, dass** die Absorptionsfläche (7) punktförmige Oberflächenstrukturen vorsieht und/oder dass die Absorptionsfläche (7) regelmäßig strukturiert ist.

3. Ultraschallwerkzeug nach Anspruch 1 oder 2, **dadurch gekennzeichnet, dass** die Absorptionsfläche (7) rillenförmige Oberflächenstrukturen vorsieht, und dass diese kreuzstrukturiert angeordnet sind und/oder dass sie quer zu der Werkzeuglängsrichtung (5) erstrecken.

4. Ultraschallwerkzeug nach einem der Ansprüche 1 bis 3, **dadurch gekennzeichnet, dass** eine senkrecht zu der Werkzeugmantelfläche (4) bestimmte Tiefe (T) der Mikrostrukturen größer ist als 1 µm und bevorzugt im Bereich von 10 µm bis 350 µm liegt.

5. Ultraschallwerkzeug nach einem der Ansprüche 1 bis 4, **dadurch gekennzeichnet, dass** die Absorptionsfläche (7) makroskopisch eben ausgebildet ist und/oder dass die Absorptionsfläche (7) geneigt zu der Werkzeuglängsrichtung (5) orientiert ist und/oder dass die zweite Teilfläche wie die erste Teilfläche in dem Endbereich (6) vorgesehen ist.

6. Ultraschallwerkzeug nach einem der Ansprüche 1 bis 5, **dadurch gekennzeichnet, dass** die oberflächenstrukturierte Absorptionsfläche (7) eine Beschichtung vorsieht.

7. Ultraschallwerkzeug nach einem der Ansprüche 1 bis 6, **dadurch gekennzeichnet, dass** die Absorptionsfläche (7) symmetrisch zu einer die Werkzeuglängsrichtung (5) aufnehmenden Werkzeuglängsmittelebene (13) orientiert und/oder dass die Werkzeuglängsmittelebene (13) als eine Symmetrieebene des Ultraschallwerkzeugs (1) ausgebildet ist und/oder dass das Ultraschallwerkzeug (1) bezogen auf eine senkrecht zu der Werkzeuglängsrichtung (5) orientierten Quermittelebene (11) symmetrisch ausgebildet ist, wobei auch die zweite Stirnseite (3') als Verbindungskontaktfläche (3') ausgebildet ist.

8. Ultraschallwerkzeug nach einem der Ansprüche 1 bis 7, **dadurch gekennzeichnet, dass** an der wenigstens einen Verbindungskontaktfläche (2, 3') eine Anlagekontur (10) vorgesehen ist und/oder dass sich das Ultraschallwerkzeug (1) in dem Endbereich (6) bezogen auf einen senkrecht zu der Werkzeuglängsrichtung (5) orientierten Querschnitt wenigstens abschnittsweise zu der Verbindungskontaktfläche (2, 3') hin verjüngt.

9. Ultraschallwerkzeug nach einem der Ansprüche 1 bis 8, **dadurch gekennzeichnet, dass** die oberflächenstrukturierte Absorptionsfläche (7) durch Drahterodieren und/oder durch Senkerodieren und/oder durch elektrochemisches Abtragen und/oder durch Gravieren und/oder durch Laserablation und/oder urformend hergestellt ist und/oder dass das Ultraschallwerkzeug (1) aus einem Hartmetall oder Stahl oder einer Keramik und bevorzugt aus einem Wolframcarbid-basierten Hartmetall oder Bornitrid besteht und/oder besonders bevorzugt Wolframcarbid in einer Kobaltmatrix aufweist.

10. Ultraschallverbindungsvorrichtung zum Ultraschallschweißen und/oder Ultraschallbonden umfassend
- ein Ultraschallwerkzeug (1) nach einem der Ansprüche 1 bis 9 mit wenigstens einer an der Werkzeugmantelfläche (4) gebildeten oberflächenstrukturierten Absorptionsfläche (7),
- einen Ultraschallgenerator und einen Transducer, wobei der Ultraschallgenerator den Transducer derart zu Schwingungen anregt und der Transducer mit dem Ultraschallwerkzeug (1) derart zusammenwirkt, dass das Ultraschallwerkzeug (1) zu Ultraschallschwingungen und bevorzugt zu Ultraschallbiegeschwingungen anregbar ist,
- einen Lasergenerator zum Bereitstellen eines Laserstrahls (8),
wobei der Laserstrahl (8) so auf den Endbereich (6) des Ultraschallwerkzeugs (1) ausgerichtet ist, dass er bevorzugt vollständig und wenigstens teilweise auf die dort gebildete Absorptionsfläche (7) des Ultraschallwerkzeugs (1) trifft.

11. Ultraschallverbindungsvorrichtung nach Anspruch 10, **dadurch gekennzeichnet, dass** die Tiefe (T) der Mikrostruktur der Absorptionsfläche (7) größer ist als eine Wellenlänge des Laserstrahls (8) und bevorzugt um einen Faktor 10 oder mehr größer ist als die Wellenlänge des Laserstrahls (8).

12. Ultraschallverbindungsvorrichtung nach Anspruch 10 oder 11, **dadurch gekennzeichnet, dass** die Wellenlänge des Laserstrahl (8) so auf ein Material des Ultraschallwerkzeugs (1) und/oder eine Beschaffenheit der Oberflächenstruktur und/oder die Beschichtung abgestimmt ist, dass für die Absorptionsfläche (7) ein Absorptionsgrad von mindestens 0,81 und bevorzugt von 0,86 oder mehr und besonders bevorzugt von mindestens 0,9 bereitgestellt ist.

13. Ultraschallverbindungsvorrichtung nach einem der Ansprüche 10 bis 12, **dadurch gekennzeichnet, dass** der Laserstrahl (8) so ausgerichtet ist, dass er schräg, das heißt nicht senkrecht auf die Absorptionsfläche (7) trifft.

14. Ultraschallverbindungsvorrichtung nach einem der Ansprüche 10 bis 13, **dadurch gekennzeichnet, dass** der Absorptionsgrad der oberflächenstrukturierten Absorptionsfläche (7) in Abhängigkeit von einem Einfallswinkel des Laserstrahls (8) variiert.

## Claims

1. An ultrasonic tool (1) comprising a first end face (2) and a second end face (3, 3') opposite the first end face (2), and a tool circumferential area (4) connecting the first end face (2) and the second end face (3, 3'), wherein the ultrasonic tool (1) is excitable to vibrations via a transducer which has in particular piezoelectric transducers as vibrations exciters, wherein the ultrasonic tool (1) is formed elongated in a tool longitudinal direction (5), wherein at least the first end face (2) is formed as a connection contact area (2, 3') which is arranged for pressing the ultrasonic tool (1) against a connection component, and wherein the ultrasonic tool (1) has an end region (6) which has the connection contact area (2, 3') and extends from the connection contact area (2, 3') in the tool longitudinal direction (5) over 15 mm, but at most one third of a length (L) of the ultrasonic tool (1) in the direction of the opposite end face (2, 3, 3'), **characterized in that** in the end region (6) a first partial area of the tool circumferential area (4) is formed as a surface-structured absorption area (7), wherein the surface-structured absorption area (7) is formed to substantially absorb a laser beam directed onto it and otherwise to diffusely reflect it, **in that** a degree of absorption of the absorption area (7) is greater than a degree of absorption of a second partial area of the tool circumferential area (4) adjoining the absorption area (7) and/or than a degree of absorption of the tool circumferential area (4) outside the end region (6), and **in that** the surface structure of the absorption area (7) is formed as a microstructure, wherein a roughness of the first partial area forming the absorption area (7) is greater than a roughness of the second partial area of the tool circumferential area (4).

2. The ultrasonic tool according to claim 1, **characterized in that** the absorption area (7) provides point-shaped surface structures and/or **in that** the absorption area (7) is structured regularly.

3. The ultrasonic tool according to claim 1 or 2, **characterized in that** the absorption area (7) provides groove-shaped surface structures, and **in that** these are disposed in a parallel structured and/or cross-structured manner and/or **in that** they extend transversely to the tool longitudinal direction (5).

4. The ultrasonic tool according to any of claims 1 to 3, **characterized in that** a depth (T) of the microstructures determined perpendicularly to the tool circumferential area (4) is greater than 1 µm and is preferably in the range of 10 µm to 350 µm.

5. The ultrasonic tool according to any of claims 1 to 4, **characterized in that** the absorption area (7) is formed to be macroscopically planar and/or **in that** the absorption area (7) is oriented to be inclined with respect to the tool longitudinal direction (5) and/or **in that** the second partial area is provided like the first partial area in the end region (6).

6. The ultrasonic tool according to any of claims 1 to 5, **characterized in that** the surface-structured absorption area (7) provides a coating.

7. The ultrasonic tool according to any of claims 1 to 6, **characterized in that** the absorption area (7) is oriented symmetrically with respect to a tool longitudinal center plane (13) incorporating the tool longitudinal direction (5) and/or **in that** the tool longitudinal center plane (13) is formed as a symmetry plane of the ultrasonic tool (1) and/or **in that** the ultrasonic tool (1) is formed symmetrically with respect to a transverse center plane (11) oriented perpendicularly to the tool longitudinal direction (5), wherein the second end face (3') is also formed as a connection contact area (3').

8. The ultrasonic tool according to any of claims 1 to 7, **characterized in that** a contact contour (10) is provided on the at least one connection contact area (2, 3') and/or **in that** the ultrasonic tool (1) tapers in the end region (6) at least in sections towards the connection contact area (2, 3') with respect to a cross-section oriented perpendicularly to the tool longitudinal direction (5).

9. The ultrasonic tool according to any of claims 1 to 8, **characterized in that** the surface-structured absorption area (7) is produced by wire erosion and/or by sink erosion and/or by electrochemical machining and/or by engraving and/or by laser ablation and/or by way of primary forming and/or **in that** the ultrasonic tool (1) consists of a hard metal or steel or ceramics and preferably of a tungsten carbide-based hard metal or boron nitride and/or particularly preferably has tungsten carbide in a cobalt matrix.

10. An ultrasonic connection device for ultrasonic welding and/or ultrasonic bonding, comprising
- an ultrasonic tool (1) according to any of claims 1 to 9 having at least one surface-structured absorption area (7) formed on the tool circumferential area (4),
- an ultrasonic generator and a transducer, wherein the ultrasonic generator excites the transducer to vibrations in such a way and the transducer interacts with the ultrasonic tool (1) in such a way that the ultrasonic tool (1) can be excited to ultrasonic vibrations and preferably to ultrasonic bending vibrations,
- a laser generator for providing a laser beam (8),
wherein the laser beam (8) is aligned with the end region (6) of the ultrasonic tool (1) in such a way that it preferably impinges completely and at least partially on the absorption area (7) of the ultrasonic tool (1) formed there.

11. The ultrasonic connection device according to claim 10, **characterized in that** the depth (T) of the microstructure 2 of the absorption area (7) is greater than a wavelength of the laser beam (8) and is preferably greater than the wavelength of the laser beam (8) by a factor of 10 or more.

12. The ultrasonic connection device according to claim 10 or 11, **characterized in that** the wavelength of the laser beam (8) is matched to a material of the ultrasonic tool (1) and/or a quality of the surface structure and/or the coating in such a way that a degree of absorption of at least 0.81 and preferably of 0.86 or more and particularly preferably of at least 0.9 is provided for the absorption area (7).

13. The ultrasonic connection device according to any of claims 10 to 12, **characterized in that** the laser beam (8) is aligned in such a way that it impinges on the absorption area (7) obliquely, that is, not perpendicularly.

14. The ultrasonic connection device according to any of claims 10 to 13, **characterized in that** the degree of absorption of the surface-structured absorption area (7) varies depending on an angle of incidence of the laser beam (8).

## Revendications

1. Outil à ultrasons (1) comprenant une première face frontale (2) et une deuxième face frontale (3, 3') opposée à la première face frontale (2) ainsi qu'une surface extérieure (4) de l'outil reliant la première face frontale (2) et la deuxième face frontale (3, 3'), l'outil à ultrasons (1) pouvant être mis en oscillation par l'intermédiaire d'un transducteur comprenant notamment des transducteurs piézoélectriques en guise d'oscillateurs, l'outil à ultrasons (1) étant de conformation allongée dans le sens longitudinal (5) de l'outil , la première face frontale (2) au moins étant réalisée comme surface de contact de liaison (2, 3'), laquelle est conçue pour presser l'outil à ultrasons (1) contre un élément de liaison et l'outil à ultrasons (1) présentant une zone d'extrémité (6) comprenant la surface de contact de liaison (2, 3') et s'étendant depuis la surface de contact de liaison (2, 3') dans le sens longitudinal (5) de l'outil sur une longueur de 15 mm, au maximum cependant sur un tiers d'une longueur (L) de l'outil à ultrasons (1) en direction de la face frontale opposée (2, 3, 3'), **caractérisé en ce que** dans la zone d'extrémité (6) une première surface partielle de la surface extérieure (4) de l'outil est réalisée sous forme de surface d'absorption (7) dotée d'une structure superficielle, la surface d'absorption (7) dotée d'une structure superficielle étant conçue pour absorber en grande partie un rayon laser dirigé contre elle et réfléchir le reste de façon diffuse, et **en ce qu'**un degré d'absorption de la surface d'absorption (7) est supérieur à un degré d'absorption d'une deuxième surface partielle de la surface extérieure (4) de l'outil contiguë à la surface d'absorption (7) et/ou à un degré d'absorption de la surface extérieure (4) de l'outil extérieure à la zone d'extrémité (6), et **en ce que** la structure superficielle de la surface d'absorption (7) est réalisée sous forme de microstructure, la rugosité de la première surface partielle de la surface formant la surface d'absorption (7) étant supérieure à la rugosité de la deuxième surface partielle de la surface extérieure (4) de l'outil.

2. Outil à ultrasons selon la revendication 1, **caractérisé en ce que** des structures superficielles ponctuelles sont prévues sur la surface d'absorption (7) et/ou **en ce que** la surface d'absorption (7) est structurée régulièrement.

3. Outil à ultrasons selon la revendication 1 ou 2, **caractérisé en ce que** des structures superficielles rainurées sont prévues sur la surface d'absorption (7), et **en ce que** ces structures ont un agencement parallèle et/ou entrecroisé, et/ou **en ce que** qu'elles s'étendent transversalement par rapport au sens longitudinal (5) de l'outil.

4. Outil à ultrasons selon l'une des revendications 1 à 3, **caractérisé en ce qu'**une certaine profondeur (T) des microstructures orthogonale par rapport à la surface extérieure (4) de l'outil est supérieure à 1 µm et de préférence comprise entre 10 µm et 350 µm.

5. Outil à ultrasons selon l'une des revendications 1 à 4, **caractérisé en ce que** la surface d'absorption (7) est macroscopiquement plane et/ou **en ce que** la surface d'absorption (7) est inclinée par rapport au sens longitudinal (5) de l'outil et/ou **en ce que** la deuxième surface partielle est, tout comme la première surface partielle, prévue dans la zone d'extrémité (6).

6. Outil à ultrasons selon l'une des revendications 1 à 5, **caractérisé en ce qu'**un revêtement est prévu sur la surface d'absorption (7) dotée d'une structure superficielle.

7. Outil à ultrasons selon l'une des revendications 1 à 6, **caractérisé en ce que** la surface d'absorption (7) est orientée symétriquement par rapport à un plan médian longitudinal (13) de l'outil comprenant le sens longitudinal (5) de l'outil, et/ou **en ce que** le plan médian longitudinal (13) de l'outil forme un plan de symétrie de l'outil à ultrasons (1), et/ou **en ce que** l'outil à ultrasons (1) est de conformation symétrique par rapport à un plan médian transversal (11) perpendiculaire au sens longitudinal (5) de l'outil, la deuxième face frontale (3') étant également réalisée comme surface de contact de liaison (3').

8. Outil à ultrasons selon l'une des revendications 1 à 7, **caractérisé en ce qu'**un contour de contact (10) est prévu à la (aux) surface(s) de contact de liaison (2, 3'), et/ou **en ce que** l'outil à ultrasons (1) présente au niveau de la zone d'extrémité (6) une section qui, par rapport à une section d'orientation perpendiculaire au sens longitudinal (5) de l'outil (5), est partiellement au moins décroissante vers la surface de contact de liaison (2, 3').

9. Outil à ultrasons selon l'une des revendications 1 à 8, **caractérisé en ce que** la surface d'absorption (7) dotée d'une structure superficielle est obtenue par électroérosion à fil et/ou par électroérosion par enfonçage et/ou par enlèvement électrochimique et/ou par gravure et/ou par ablation par laser et/ou par formage primaire, et/ou **en ce que** l'outil à ultrasons (1) est en un métal dur ou en acier ou en céramique et de préférence en un métal dur à base de carbure de tungstène ou en nitrure de bore et/ou, de préférence particulière, comporte du carbure de tungstène dans une matrice de cobalt.

10. Dispositif de liaison par ultrasons pour soudage par ultrasons et/ou liaison par ultrasons comprenant
- un outil à ultrasons (1) selon l'une des revendications 1 à 9 avec au moins une surface d'absorption (7) dotée d'une structure superficielle formée sur la surface extérieure (4) de l'outil,
- un générateur d'ultrasons et un transducteur, le générateur d'ultrasons mettant le transducteur en oscillation et le transducteur interagissant avec l'outil à ultrasons (1) de façon telle que l'outil à ultrasons (1) puisse être mis en oscillations ultrasonores et, de préférence, en vibrations ultrasonores de flexion,
- un générateur laser pour la mise à disposition d'un rayon laser (8), le rayon laser (8) étant dirigé sur une section d'extrémité (6) de l'outil à ultrasons (1) de façon à y toucher de préférence la totalité ou au moins une partie de la surface d'absorption (7) de l'outil à ultrasons (1).

11. Dispositif de liaison par ultrasons selon la revendication 10, **caractérisé en ce que** la profondeur (T) de la microstructure de la surface d'absorption (7) est supérieure à une longueur d'onde du rayon laser (8) et est de préférence supérieure d'un facteur 10 à une longueur d'onde du rayon laser (8).

12. Dispositif de liaison par ultrasons selon la revendication 10 ou 11, **caractérisé en ce que** la longueur d'onde du rayon laser (8) est adaptée au matériau de l'outil à ultrasons (1) et/ou à la nature de la structure superficielle et/ou du revêtement de façon à assurer un degré d'absorption de la surface d'absorption (7) d'au moins 0,81 et de préférence de 0,86 ou plus et, de préférence particulière, d'au moins 0,9.

13. Dispositif de liaison par ultrasons selon l'une des revendications 10 à 12, **caractérisé en ce que** le rayon laser (8) est orienté de façon à ce que son angle d'incidence sur la surface d'absorption (7) soit oblique, c'est-à-dire non perpendiculaire.

14. Dispositif de liaison par ultrasons selon l'une des revendications 10 à 13, **caractérisé en ce que** le degré d'absorption de la surface d'absorption (7) dotée d'une structure superficielle varie en fonction d'un angle d'incidence du rayon laser (8).
